(19) Europäisches Patentamt / European Patent Office / Office européen des brevets

(11) **EP 2 452 747 A1**

(12) **EUROPEAN PATENT APPLICATION**
published in accordance with Art. 153(4) EPC

(43) Date of publication:
**16.05.2012 Bulletin 2012/20**

(51) Int Cl.:
**B01J 23/89** (2006.01)　　**B01D 53/94** (2006.01)
**F01N 3/10** (2006.01)

(21) Application number: **10793943.1**

(22) Date of filing: **28.05.2010**

(86) International application number:
**PCT/JP2010/059124**

(87) International publication number:
**WO 2011/001772 (06.01.2011 Gazette 2011/01)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **03.07.2009 JP 2009158814**

(71) Applicants:
• **Miyata, Seizo**
  **Nishitokyo-shi, Tokyo 202-0004 (JP)**
• **Kameyama, Hideo**
  **Tokyo 181-0001 (JP)**
• **Nisshinbo Holdings, Inc.**
  **Chuo-ku**
  **Tokyo 103-8650 (JP)**

(72) Inventors:
• **GUO Yu**
  **Koganei-shi**
  **Tokyo 184-0014 (JP)**
• **MIYATA Seizo**
  **Tokyo (JP)**
• **KAMEYAMA Hideo**
  **Tokyo (JP)**

(74) Representative: **Duckworth, Timothy John**
  **J A Kemp**
  **14 South Square**
  **Gray's Inn**
  **London WC1R 5JJ (GB)**

(54) **OXIDATION CATALYST, REDUCTION CATALYST, AND CATALYST FOR PURGING EXHAUST GAS**

(57) An oxidation catalyst containing a carbon material prepared by calcining a transition metal compound and a nitrogen-containing organic substance, or a transition metal compound, a nitrogen-containing organic substance, and a carbon compound not containing nitrogen, the oxidation catalyst oxidizing CO and/or a hydrocarbon.

*Fig.3*

EP 2 452 747 A1

**Description**

**Technical Field**

The present invention relates to an oxidation catalyst, a reduction catalyst, and a catalyst for purging exhaust gas.

**Background Art**

A variety of catalysts are used in order to purge exhaust gas discharged from internal combustion engines. For example, for purging exhaust gas of vehicles, noble metal catalysts for purging exhaust gas, particularly, three-way catalysts in which Pt, Rh, Pd, or the like is supported on a support are useful (for example, Patent Literature 1).

**Citation List**

**Patent Literature**

Patent Literature 1: Japanese Examined Patent Application Publication No. 1991-38892

**Summary of Invention**

**Technical Problem**

The exhaust gas from vehicles contains $NO_x$, CO, and hydrocarbon (HC); in order to purge such exhaust gas, CO and HC need to be oxidized, and $NO_x$ (NO, $NO_2$) needs to be reduced. Because the oxidation-reduction reaction is performed under a severe condition, platinum (Pt) is used as a principal component of the catalyst for keeping high activity.
However, Pt is very expensive, deposits of Pt are small, and resource is limited; accordingly, stable supply for a long period of time may not be achieved. For this reason, instead of Pt, a highly active catalyst that is inexpensive and can be stably supplied for a long period of time has been demanded.
Then, an object of the present invention is to provide a catalyst that can purge exhaust gas containing $NO_x$, CO, HC, and the like without using Pt.

**Solution to Problem**

The present invention provides an oxidation catalyst comprising a carbon material prepared by calcining a transition metal compound and a nitrogen-containing organic substance, or a transition metal compound, a nitrogen-containing organic substance, and a carbon compound not containing nitrogen, the oxidation catalyst oxidizing CO and/or a hydrocarbon.
The present invention also provides a reduction catalyst including a carbon material prepared by calcining a transition metal compound and a nitrogen-containing organic substance or a transition metal compound, a nitrogen-containing organic substance, and a carbon compound not containing nitrogen, and at least one load material selected from the group consisting of Pd, Rh, Ru, Ni, Co, Fe, Ce, Cu, Ti, Zr, Sn, V, Nb, Ta, Cr, Mo, W, Bi, Mn, and compounds thereof supported on the carbon material, the reduction catalyst reducing $NO_x$.
As the carbon material, in Japanese Patent Application Laid-Open Publication No. 2004-362802, it is shown that carbon alloy fine particles prepared by heat treating and powdering a phthalocyanine-containing furan resin can be used as a base material for an electrode of the fuel cell; however, the present inventors found a surprising ability of a carbon material prepared by calcining (i) a transition metal compound and a nitrogen-containing organic substance or (ii) a transition metal compound, a nitrogen-containing organic substance, and a carbon compound not containing nitrogen itself has an oxidation catalyst action, and if the predetermined load material is supported on the carbon material, a reduction catalyst action is demonstrated, and have completed the invention on the basis of the findings.
It is preferable that in the oxidation catalyst, the oxidation temperature is not less than 200°C, and in the reduction catalyst, the reduction temperature is not less than 200°C.
At an oxidation temperature of not less than 200°C, the activity of the oxidation catalyst is improved, and the ability to oxidize CO and a hydrocarbon is significantly improved. Moreover, at a reduction temperature of not less than 200°C, the activity of the reduction catalyst is improved, and the ability to reduce $NO_x$ becomes significantly higher.
In the reduction catalyst, if the load material is at least one selected from the group consisting of Pd and Rh, and the amount of the load material based on the mass of the carbon material is 0.01 to 15% by mass, the reduction activity is particularly high, and the ability to reduce $NO_x$ is extremely good.
The present invention also provides a catalyst for purging exhaust gas including at least one of the oxidation catalyst and the reduction catalyst. The oxidation catalyst and reduction catalyst according to the present invention are used as a catalyst for purging exhaust gas; thereby, $NO_x$, CO, a hydrocarbon, and the like contained in the exhaust gas can be purged with high efficiency.

**Advantageous Effects of Invention**

According to the present invention, an oxidation catalyst, reduction catalyst and catalyst for purging exhaust gas that include a carbon material without using Pt and can purge $NO_x$, CO, or a hydrocarbon can be provided.

**Brief Description of Drawings**

[Figure 1] Figure 1 is a schematic view of an apparatus for measuring the concentrations of $NO_x$, CO, and a hydrocarbon to be purged.
[Figure 2] Figure 2 is a schematic view of a reaction tube in the measuring apparatus.
[Figure 3] Figure 3 is a drawing showing the measurement result of the conversion rates of $NO_x$, CO, and a hydrocarbon ($C_3H_6$) and carbon balance in Example 1.
[Figure 4] Figure 4 is a drawing showing change of the activity over time on the catalyst in Example 1.
[Figure 5] Figure 5 is a drawing showing the measurement result of the conversion rates of $NO_x$, CO, and a hydrocarbon ($C_3H_6$) and carbon balance in Example 2.
[Figure 6] Figure 6 is a drawing showing change of the activity over time on the catalyst in Example 2.
[Figure 7] Figure 7 is a drawing showing the result of a test at 350°C for a long period of time in Example 2.
[Figure 8] Figure 8 is a drawing showing the measurement result of the conversion rates of $NO_x$, CO, and a hydrocarbon ($C_3H_6$) and carbon balance in Example 3.
[Figure 9] Figure 9 is a drawing showing the measurement result of the conversion rates of $NO_x$, CO, and a hydrocarbon ($C_3H_6$) and carbon balance in Example 4.
[Figure 10] Figure 10 is a drawing showing the measurement result of the conversion rates of $NO_x$, CO, and a hydrocarbon ($C_3H_6$) and carbon balance in Example 5.
[Figure 11] Figure 11 is a drawing showing the measurement result of the conversion rates of $NO_x$, CO, and a hydrocarbon ($C_3H_6$) and carbon balance in Comparative Example 1.
[Figure 12] Figure 12 is a drawing showing the measurement result of the conversion rates of $NO_x$, CO, and a hydrocarbon ($C_3H_6$) and carbon balance in Comparative Example 2.
[Figure 13] Figure 13 is a drawing showing the measurement result of the conversion rates of $NO_x$, CO, and a hydrocarbon ($C_3H_6$) and carbon balance in Comparative Example 3.

**Description of Embodiments**

Hereinafter, an embodiment of the present invention will be described. The carbon material that forms an oxidation catalyst, reduction catalyst, or catalyst for purging exhaust gas used in the present embodiment is prepared by calcining (i) a transition metal compound and a nitrogen-containing organic substance or (ii) a transition metal compound, a nitrogen-containing organic substance, and a carbon compound not containing nitrogen. Such a carbon material is a carbon alloy catalyst in which the carbon skeleton is doped with nitrogen atoms, and a transition metal element is contained, and the activity is high.

In production of the carbon material, calcination is performed using the transition metal compound and nitrogen-containing organic substance as a raw material in the case where the nitrogen-containing organic substance is not only a nitrogen source, but also sufficiently contains carbon as a carbon source; and in the case where the carbon source is further needed, the transition metal compound, nitrogen-containing organic substance, and carbon compound not containing nitrogen are used as a raw material.

Here, the carbon compound not containing nitrogen is not particularly limited; for example, celluloses, carboxymethyl celluloses, polyvinyl alcohol, polyacrylic acid, polyfurfuryl alcohol, furan resins, phenol resins, phenol formaldehyde resins, epoxy resins, pitch, general-purpose plastics such as polyvinylidene chloride and polymethacrylic acid, engineering plastics, super engineering plastics such as polysulfones, ionomer resins, or the like can be used. Inorganic substances such as coal can also be used. These compounds can be used alone, or two or more thereof can be used in combination. Among them, polymethacrylic acid is preferable from the viewpoint of cost and carbonization yield.

Moreover, as the nitrogen-containing organic substance, for example, pyrrole compounds such as polypyrrole, imide compounds such as a phthalocyanine complex, polyimides, and polycarbodiimide, amide compounds such as polyamides, imidazole compounds such as polyimidazole, lignin, biomass, poly(vinylpyridine), melamine resins, urea resins, chelate resins, humic acid, polyaniline, polyacrylonitrile, ε-caprolactam, protein, and the like can be used; among them, ε-caprolactam is preferable.

As a transition metal, elements that belong to the 4th Row of Group 3 to Group 12 on the periodic table can be used, and for example, cobalt (Co), iron (Fe), manganese (Mn), nickel (Ni), copper (Cu), titanium (Ti), chromium (Cr), and zinc (Zn) are preferable; as the transition metal compound, salts, hydroxides, oxides, nitrides, sulfides, carbides, complexes, and polymer complexes of the transition metals can be used, and among these, particularly, cobalt chloride, cobalt oxide, cobalt phthalocyanine, iron chloride, iron oxide, and iron phthalocyanine are preferable. Co, Fe, Mn, Ni, Cu, Ti, Cr, Zn, and compounds thereof improve the catalyst activity of the carbon catalyst.

The (i) transition metal compound and nitrogen-containing organic substance or (ii) transition metal compound, nitrogen-containing organic substance, and carbon compound not containing nitrogen may be dissolved in a solvent and mixed to prepare a precursor composition. The solvent is not particularly limited as long as the solvent can dissolve these carbon compound not containing nitrogen, nitrogen-containing organic substance, and transition metal compound; for example, dimethylformamide, dimethylacetamide, dimethylsulfoxide, N-methylpyrrolidone, cyclohexanone, methyl ethyl ketone, and the like can be used.

Moreover, it is preferable that a carbon additive such as carbon black may be added to a mixture of the (i) transition metal compound and nitrogen-containing organic substance or (ii) transition metal compound, nitrogen-containing organic substance, and carbon compound not containing nitrogen. By adding the carbon additive, the activity of the carbon material can be improved.

When the (i) transition metal compound and nitrogen-containing organic substance or (ii) transition metal compound, nitrogen-containing organic substance and carbon compound not containing nitrogen are calcined, in order to prevent contamination with impurities of the carbon material to be produced, it is preferable that calcination is performed in an inert atmosphere purged by nitrogen or the like.

Moreover, the produced carbon material can be powdered by a ball mill or the like, and formed into fine particles. Further, using sieves having different sizes of opening, coarse products are removed to provide uniform fme particles; thereby, the surface area of the carbon material is increased, and the activities as the oxidation catalyst, the reduction catalyst, and the catalyst for purging exhaust gas are improved.

It is preferable that the proportion of the carbon compound not containing nitrogen with respect to the nitrogen-containing organic substance to be blended is such that the amount of nitrogen atoms in the carbon material after calcination is not less than 0.5% by mass and not more than 20% by mass, and more preferably not less than 5% by mass and not more than 20% by mass based on the total mass of the carbon material.

The carbonization treatment of the carbon compound not containing nitrogen, nitrogen-containing organic substance, and transition metal compound, or the precursor composition prepared by dissolving and mixing these in the solvent is performed preferably at 800 to 1000°C for 0.5 to 5 hours, and particularly preferably at 900°C to 1000°C for 0.5 to 2 hours. A residue produced when the carbon material subjected to the carbonization treatment is further calcined under the air atmosphere at a high temperature of approximately 400 to 800°C for approximately 2 to 5 hours can also be used as the oxidation catalyst.

Moreover, the carbon material may be doped with boron atoms and/or a chalcogen compound. In the carbon material doped with boron atoms and/or a chalcogen compound, the activity is improved compared to the carbon material doped with nitrogen atoms. In order for the carbon material to be doped with boron atoms and/or a chalcogen compound, for example, boric acid, boric acid salt, halogenated boric acid salt, or the like as a boron-containing organic substance, and an oxide, a sulfide, and the like as a chalcogen compound may be added to a mixture of the transition metal compound and the nitrogen-containing organic substance or a mixture of a transition metal compound, a nitrogen-containing organic substance, and a carbon compound not containing nitrogen.

The oxidation catalyst can oxidize CO to $CO_2$ in an oxidation atmosphere; at an oxidation temperature of not less than 200°C, the activity is improved to improve the conversion rate of CO to $CO_2$; at an oxidation temperature of not less than 250°C, the conversion rate is further improved; at an oxidation temperature of not less than 300°C, the conversion rate reaches approximately 100%, and CO can be purged almost completely. Particularly, even at normal temperature of not more than 100°C, e.g., around 25°C in which it is known that the reaction cannot be made by the platinum catalyst in the presence of oxygen with the concentration of oxygen of not less than 1%, the oxidation catalyst can oxidize CO to $CO_2$.

Moreover, at an oxidation temperature of not less than 200°C, the oxidation catalyst can oxidize hydrocarbons such as propane and butane more efficiently to water and $CO_2$. At an oxidation temperature of not less than 250°C, the conversion rate to water and $CO_2$ is improved. At an oxidation temperature of not less than 300°C, the conversion rate reaches approximately 100%, and hydrocarbons can be purged almost completely.

The reduction catalyst in the present embodiment includes the carbon material prepared by calcining the transition metal compound and nitrogen-containing organic substance or the transition metal compound, nitrogen-containing organic substance, and carbon compound not containing nitrogen, and at least one load material selected from the group consisting of Pd, Rh, Ru, Ni, Co, Fe, Ce, Cu, Ti, Zr, Sn, V, Nb, Ta, Cr, Mo, W, Bi, Mn, and compounds thereof supported on the carbon material, and reduces $NO_x$ in a reduction atmosphere. The reduction temperature of $NO_x$ is preferably not less than 200°C, more preferably not less than 250°C, and still more preferably not less than 300°C.

As the load material, among Pd, Rh, Ru, Ni, Co, Fe, Ce, Cu, Ti, Zr, Sn, V, Nb, Ta, Cr, Mo, W, Bi, Mn, and compounds thereof, particularly Pd or Rh is preferable because the reduction activity is high. Pd or Rh is supported on the carbon material in a proportion of preferably 0.01 to 15% by mass, more preferably 0.1 to 10% by mass, and particularly preferably 0.5 to 2% by mass based on the mass of the carbon material.

Here, in the case where Pd or Rh is supported on the carbon material, first, an aqueous solution of $PdCl_2$ containing Pd in a desired amount to be supported or $Rh(NO_3)_3$ containing Rh in a desired amount to be supported is prepared. The carbon material is mixed with the aqueous solution at room temperature, and the resultant is stirred for 1 to 5 hours. The aqueous solution is kept at 70 to 100°C for 10 to 20 hours, and the moisture content is vaporized. The carbon material thus obtained is sufficiently polished; thereby, a carbon material carrying Pd or Rh can be obtained. Moreover, in the case of the metal atom other than Pd and Rh, i.e., Ni or the like, an aqueous solution is prepared and mixed with the carbon material in the same manner; thereby, the metal atom can be supported on the carbon material. The amount of the metal atom or the like to be supported can be determined by simple calculation from the amount of a charged sample; in the case of analyzing with high accuracy, an ICP optical emission spectrometer or the like can be used.

Further, the catalyst for purging exhaust gas in the present embodiment includes at least one of the oxidation catalyst and the reduction catalyst, and can purge $NO_x$, CO, or a hydrocarbon contained in the exhaust gas. Moreover, under an oxidation reduction atmosphere in which oxygen and a reducing agent coexist, the catalyst for purging exhaust gas including both of the oxidation catalyst and the reduction catalyst functions as a three-way catalyst that simultaneously purges $NO_x$, CO, and a hydrocarbon.

As the exhaust gas containing $NO_x$, CO, and a hydrocarbon, for example, exhaust gas from vehicles is assumed. In the vehicle exhaust gas, in the oxidation atmosphere, CO is oxidized to $CO_2$ and a hydrocarbon is oxidized to water and $CO_2$; in the reduction atmosphere, $NO_x$ is reduced to nitrogen; however, a range in which oxidation and reduction occur in balance is limited to the range in the vicinity of a theoretical air-fuel ratio. Accordingly, in order for the catalyst to function as a three-way catalyst for the vehicle exhaust gas, it is preferable that the composition of the vehicle exhaust gas is controlled into the range in the vicinity of the theoretical air-fuel ratio.

The catalyst is used not only for purging the vehicle exhaust gas, and also can purge $NO_x$, CO, and a hydrocarbon contained in other gas. For example, the catalyst is suitable for application as an oxidation catalyst that oxidizes a small amount of CO contained in hydrogen obtained by reforming natural gas or the like as a fuel for the fuel cell while the relevant oxygen is supplied; the oxidation catalyst is disposed in a CO removing apparatus for supplying gas to the fuel electrode of the fuel cell, or the oxidation catalyst is mixed with the fuel electrode catalyst of the fuel cell and used for the fuel electrode portion, thereby to be able to oxidize CO in hydrogen to $CO_2$ and prevent poisoning of the electrode catalyst.

In order to measure the proportion of $NO_x$, CO, or a hydrocarbon to be oxidized or reduced by the catalyst and converted to $CO_2$ nitrogen, or the like, for example, the vehicle exhaust gas can be directly used; or a model gas can be used because the concentration of $NO_x$, CO, or a hydrocarbon contained is difficult to control. It is preferable that in the model gas, a composition similar to the real exhaust gas of the gasoline-driven car is provided, for example.

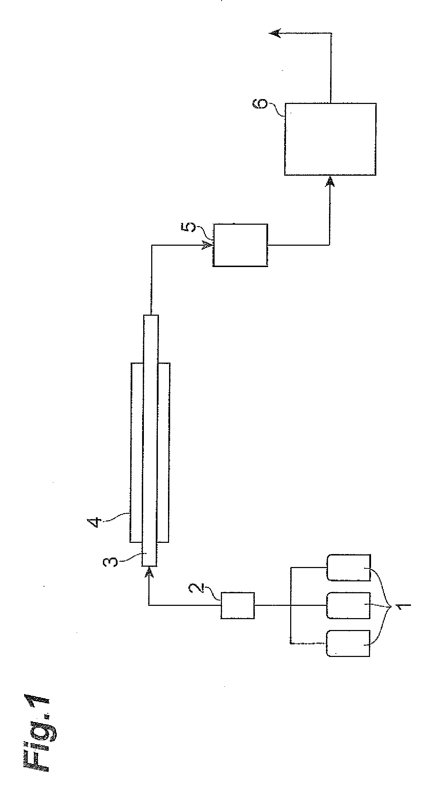

In Figure 1, a schematic view of an apparatus for measuring the concentration of the model gas containing $NO_x$, CO, and $C_3H_6$ as a hydrocarbon is shown. In the measurement apparatus including a reference gas cylinder 1, a mass flow controller 2, a reaction tube 3, a cooler 5, a gas analyzing apparatus 6, and the like, first, the respective model gases are produced from the reference gas cylinder 1, and the gases are mixed by the mass flow controller 2, and introduced into the reaction tube 3. Then, the reaction tube 3 filled with the model gas is heated by an electric heating furnace 4. Each model gas is oxidized or reduced by a catalyst 10 within the reaction tube 3. In the gas after the reaction, steam is evacuated in the cooler 5, and the composition is analyzed by the gas analyzing apparatus 6. The gas analyzing apparatus 6 is a gas chromatograph, for example, and can perform quantitative analysis of $O_2$, CO, $N_2O$, $CO_2$, a hydrocarbon ($C_3H_6$), or the like; $NO_x$, NO, $NO_2$ CO, $SO_2$ and the like can be quantitatively analyzed by an $NO_x$ analyzer, for example.

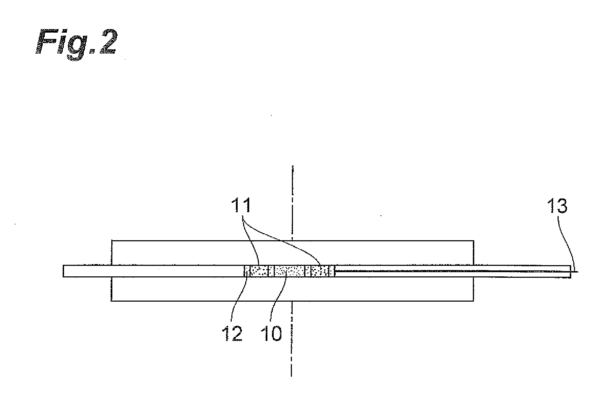

A schematic view of the reaction tube that is a part of the measurement apparatus is shown in Figure 2. The reaction tube 3 is made of quartz, and it is preferable that the catalyst for purging exhaust gas 10 is filled into the center of the reaction tube. Additionally, in order for the model gas to be distributed in the portion into which the catalyst is filled, quartz sand 11 or quartz wool 12 can be filled into both sides of the catalyst 10.

In the measurement apparatus, the purging ability of the catalyst can be evaluated as the conversion rate of each gas by the following calculation expressions.

$$\text{Conversion rate of } NO_x = \{(NO \text{ mol flow rate at inlet} + NO_2 \text{ mol flow rate}) - (NO \text{ mol flow rate at outlet} + NO_2 \text{ mol flow rate})\} / (NO \text{ mol flow rate at inlet} + NO_2 \text{ mol flow rate}) \times 100\%$$

$$\text{Conversion rate of } C_3H_6 = (C_3H_6 \text{ mol flow rate at inlet} - C_3H_6 \text{ mol flow rate at outlet}) / (C_3H_6 \text{ mol flow rate at inlet}) \times 100\%$$

$$\text{Conversion rate of } CO = (CO \text{ mol flow rate at inlet} - CO \text{ mol flow rate at outlet}) / (CO \text{ mol flow rate at inlet}) \times 100\%$$

$$\text{Carbon balance} = (\text{total mol flow rate of carbon at outlet} - \text{total mol flow rate of carbon at inlet}) / (\text{carbon total mol flow rate of carbon at inlet}) \times 100\%$$

The conversion rate indicates how much $NO_x$, CO, or a hydrocarbon is oxidized or reduced by the catalyst; a higher conversion rate indicates that $NO_x$, CO, or a hydrocarbon is more oxidized or reduced; if the conversion rate is 100%, it indicates that $NO_x$, CO, or a hydrocarbon is completely purged.

Examples

Hereinafter, the present invention will be described according to Examples, but the present invention will not be limited to these Examples.

The carbon material used in the present Examples was prepared as follows.

First, 1.5 g of polymethacrylic acid was dissolved in 20 g of dimethylformamide. Subsequently, 1.5 g of cobalt oxide (made by Nisshinbo Holdings Inc.), 1.5 g of ε-caprolactam (made by Tokyo Chemical Industry Co., Ltd.), and 1.5 g of n-butylated melamine resin (product name: U-VAN 21R, y Mitsui Chemicals, Inc.) were stirred for 6 hours to obtain a mixed solution. Thus, a precursor composition was obtained. Cobalt oxide was produced according to the method described in WO 2007/049549 by electrodialysis treatment.

Next, the carbonization treatment on the precursor composition was performed. Namely, the precursor composition was placed in a quartz tube, the quartz tube was nitrogen purged for 50 minutes by a paraboloidal reflection type infrared gold image furnace. Then, heating was started, and the temperature of the gold image furnace was raised at a temperature rising rate of 1°C/min from room temperature to 900°C. Subsequently, the quartz tube was kept at 900°C for 1 hour. Thus, a carbon material produced by carbonizing the precursor composition was obtained.

Further, the powdering treatment of the carbon material was performed. Namely, silicon nitride balls having a diameter of 1.5 cm was set within a planetary ball mill (product name: P-7, made by Fritsch Japan Co., Ltd.), and the carbon material obtained by the carbonization treatment was powdered at a rotational speed of 800 rpm for 60 minutes. The powdered carbon material was extracted, and classified by a sieve having an opening of 46 $\mu$m to obtain a catalyst.

Moreover, in order to use a catalyst carrying Pd or Rh on the carbon material, 25 ml of an aqueous solution of $PdCl_2$ containing the amount of Pd to be supported or $Rh(NO_3)_3$ containing the amount of Rh to be supported was prepared; the carbon material was mixed with the aqueous solution at room temperature of 25°C, and stirred for 2 hours. The aqueous solution was kept at 80°C for 10 hours, the moisture content was vaporized, and the obtained product was polished; thereby, a catalyst carrying Pd or Rh was obtained.

0.1 g of the obtained catalyst was filled into the center of the quartz reaction tube having an inner diameter of 6 mm, and 0.5 g of quartz sand was filled into each side of the catalyst layer for distribution of the gas.

In the present Example, a model gas containing $NO_x$, CO, and a hydrocarbon was used. In Table 1, components of the model gas and the reaction condition are shown. The reaction system was controlled at a theoretical air-fuel ratio atmosphere ($\lambda$ = 1.0, A/F = 14.63)

[Table 1]

| Model gas configuration | |
|---|---|
| $O_2$ | 0.90% |
| NO | 0.10% |
| CO | 1.00% |
| $C_3H_6$ | 0.10% |
| He | Base |
| $\lambda$* | 1.0 (Chemical equivalence point) |
| A/F** | 14.63 (Theoretical air-fuel ratio) |
| Reaction condition | |
| Flow rate | 150 mL/min |
| Catalyst | 0.10 g powder |
| Space velocity (F/w) | 90000 mL/(g·h) |
| Reactor | Fixed bed quartz reactor (i.d. 6 mm) |
| Temperature range | 150°C-500°C |

* $\lambda=\{2^*O_2+NO\}/(CO+9^*C_3H_6)$
** $A/F=14.63/(1+0.02545^*(CO+9^* C_3H_6-2^*O_2-NO)$
([CO], [$C_3H_6$], [$O_2$], [NO]: vol%)

In the analysis of the model gas, quantitative analysis of $O_2$, CO, $N_2O$ $CO_2$ a hydrocarbon, and the like was performed by a gas chromatograph (product name: GC-14B, made by Shimadzu Corporation). Moreover, in $NO_x$, NO, $NO_2$, CO, $SO_2$, and the like, quantitative analysis was performed by an $NO_x$ analyzer (product name: PG-250, made by HORIBA, Ltd.).

In the present Examples, in the catalyst comprising the carbon material prepared above and the catalyst carrying a metal atom on the carbon material, compared to the case where no catalyst was used and the case where a Pt catalyst was used, the data after the catalyst was reacted with the model gas at each temperature at an interval of 50°C in the range of 150°C to 500°C for 1 hour was collected, and the conversion rates of $NO_x$, CO, and a hydrocarbon ($C_3H_6$) and carbon balance were calculated.

(Example 1)

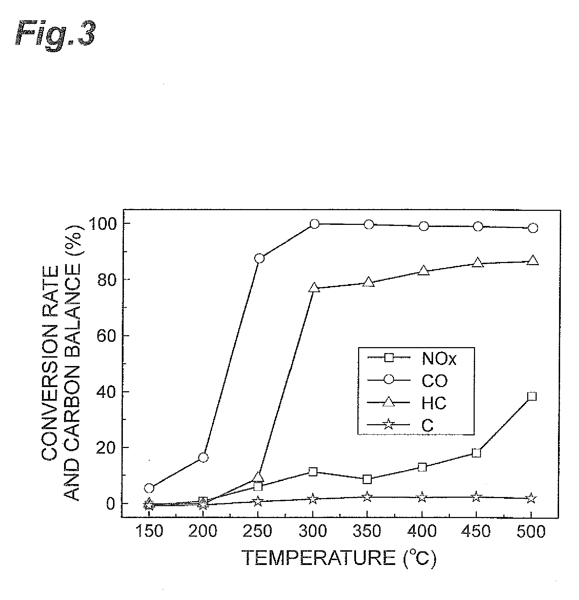

The catalyst comprising the carbon material was placed in the reaction tube, the model gas was introduced into the reaction tube, and the conversion rates of $NO_x$, CO, and a hydrocarbon ($C_3H_6$) and carbon balance were measured. The result is shown in Figure 3.

As shown in Figure 3, in the case of the catalyst comprising the carbon material, in spite of the concentration of oxygen of approximately 1%, CO was oxidized at 150°C, approximately 15% of CO was converted at 200°C, and the conversion rate of CO of was shown to be approximately 88% at 250°C. Moreover, CO was almost completely purged at 300°C, and the conversion rate of $C_3H_6$ was approximately 80%. The conversion rate of $NO_x$ was approximately 15% at temperatures up to 400°C, and approximately 39% of $NO_x$ was purged at 500°C.

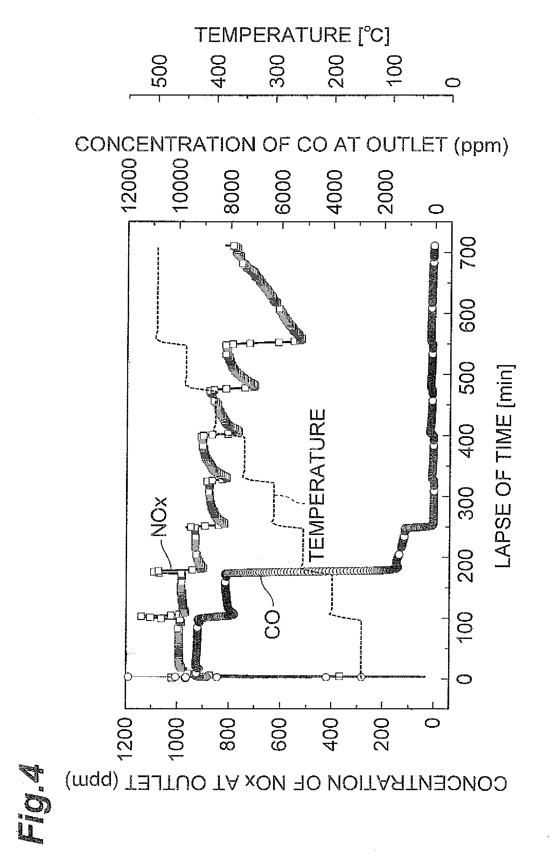

Moreover, change of the activity over time on the catalyst is shown in Figure 4. The concentration of CO at the outlet was reduced to approximately 8000 ppm after approximately 100 minutes (at 200°C), and reduced to approximately 2000 ppm or less during the period after 150 to 250 minutes (at 250°C). Subsequently, the concentration was almost 0 ppm at after 250 minutes or later. On the other hand, the concentration of $NO_x$ at the outlet was reduced from the initial concentration of 1000 ppm to approximately 500 ppm after 550 minutes (at 500°C).

(Example 2)

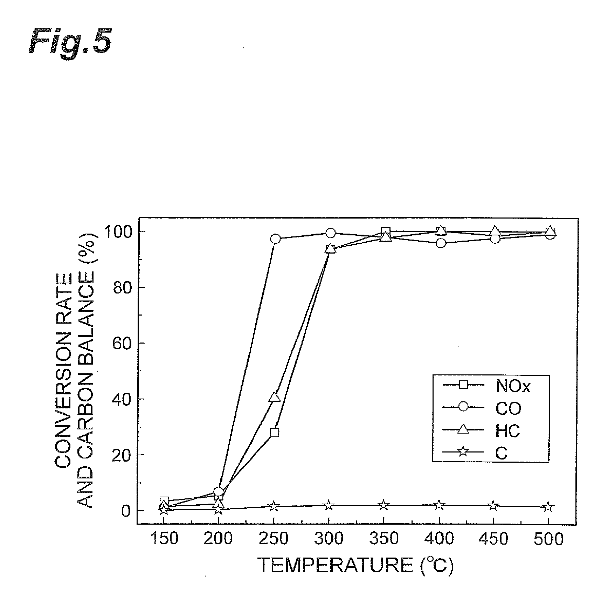

A catalyst comprising a carbon material carrying 2% by mass of Pd was placed in the reaction tube, the model gas was flowed, and measurement was performed in the same manner as above. The result is shown in Figure 5.

As shown in Figure 5, in the case where 2% by mass of Pd was supported, the conversion rate of CO was almost 100% at not less than 300°C, and the conversion rates of $NO_x$ and $C_3H_6$ were not less than 90% and very high. Moreover, the conversion rate of $NO_x$ at 250°C was 28%, the conversion rate of $C_3H_6$ at 250°C was 40%, and the conversion rate of CO at 250°C was 97%; the activity at a low temperature was higher than that of the Pt catalyst in Comparative Example 2 described later. Moreover, the carbon balance rate was almost zero, and it was suggested that the catalyst was not calcined at a high temperature of 500°C.

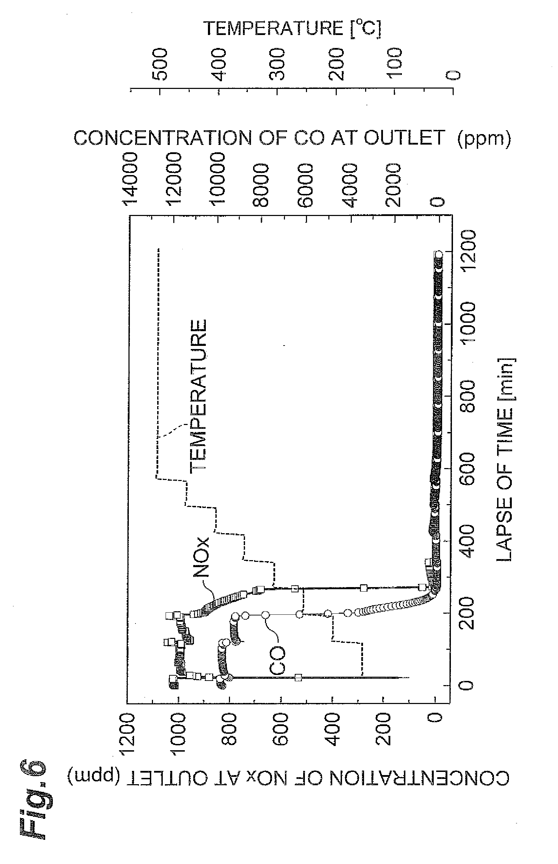

Moreover, change of activity over time on the catalyst at 500°C is shown in Figure 6. The concentration of CO at the outlet and the concentration of $NO_x$ at the outlet were sharply reduced at after 200 minutes (at not less than 200°C) or later; even if operation was continuously performed for 10 hours or more after the temperature reached 500°C, the concentration of CO at the outlet and the concentration of $NO_x$ at the outlet were almost zero, and it was recognized that the activity of the catalyst is not reduced.

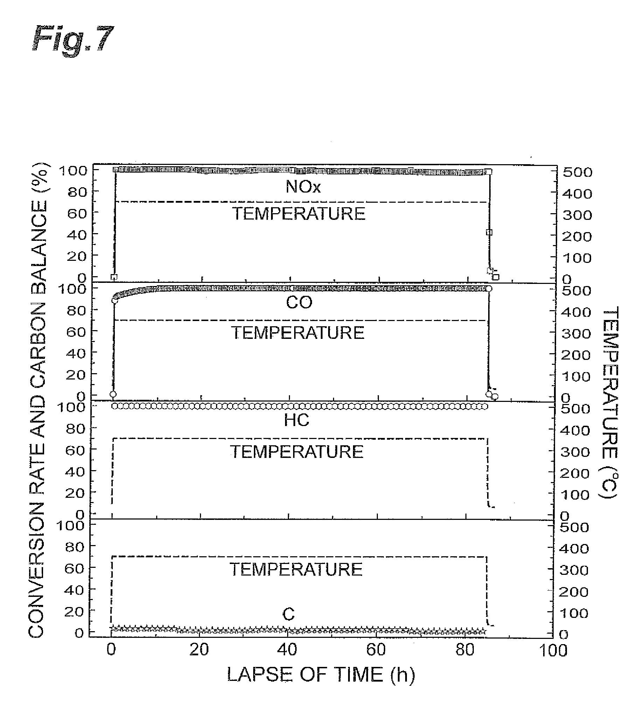

Further, the result of a test at 350°C for a long period of time in the catalyst in the case where 2% by mass of Pd was supported is shown in Figure 7. In $NO_x$, CO, and $C_3H_6$, the conversion rate around 100% was kept for 85 hours, and it was recognized that the catalyst has high durability.

(Example 3)

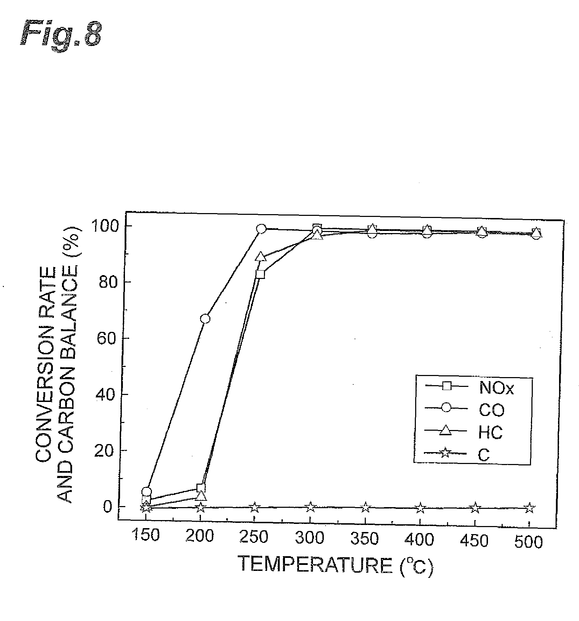

A catalyst comprising a carbon material carrying 0.5% by mass of Rh was placed in the reaction tube, the model gas was flowed, and measurement was performed in the same manner as above. The result is shown in Figure 8.

As shown in Figure 8, the conversion rate of CO exceeded 60% at 200°C; the Light-off temperature that is a temperature at which the conversion rates of the three components of $NO_x$, CO, and $C_3H_6$ reached 50% was 200 to 250°C, and lower than that in Example 2 in the case where 2% by mass of Pd was supported and in the Pt catalyst in Comparative Example 2.

(Example 4)

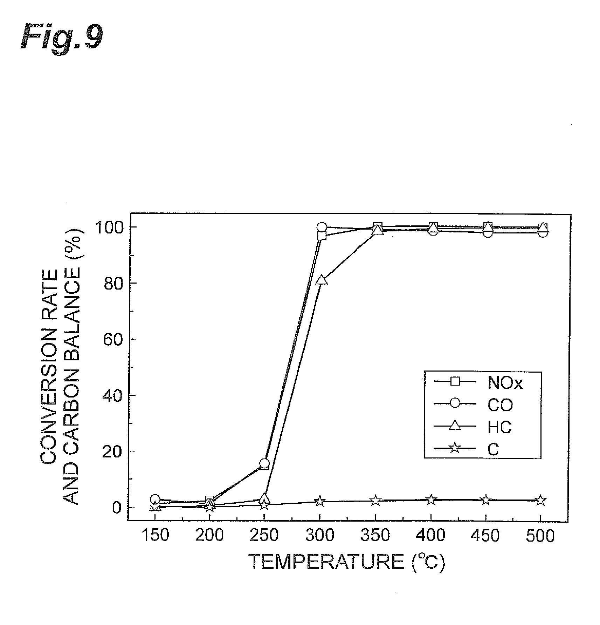

A catalyst containing a carbon material carrying 0.1 % by mass of Rh, which was lower than that in Example 3, was placed in the reaction tube, the model gas was flowed, and measurement was performed in the same manner as above. The result is shown in Figure 9.

As shown in Figure 9, the conversion rates of the three components of $NO_x$, CO, and $C_3H_6$ were not more than 20% and very low at temperatures up to 250°C; at 300°C, the conversion rates of the components other than $C_3H_6$ reached almost 100%; at not less than 350°C, the conversion rates were almost 100%.

(Example 5)

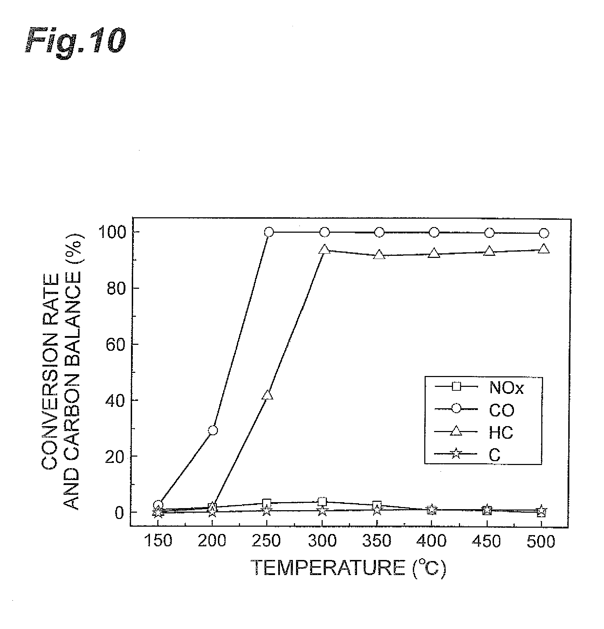

A catalyst comprising a residue obtained by calcining a catalyst comprising the carbon material in the air atmosphere at 500°C for 3 hours was prepared, and placed in the reaction tube; the model gas was flowed, and measurement was performed in the same manner as above.
The result is shown in Figure 10.

As shown in Figure 10, in the case of the catalyst comprising a residue obtained by calcining a catalyst comprising the carbon material in the air atmosphere at 500°C for 3 hours, the conversion rates of $C_3H_6$ and CO at a low temperature were higher than those in the catalyst comprising the carbon material; at 250°C, CO was completely purged, and the conversion rate of $C_3H_6$ was approximately 42%. At 300°C, the conversion rate of $C_3H_6$ was not less than 90%. However, the conversion rate of $NO_x$ was several percents and very low even if the temperature was raised.

(Comparative Example 1)

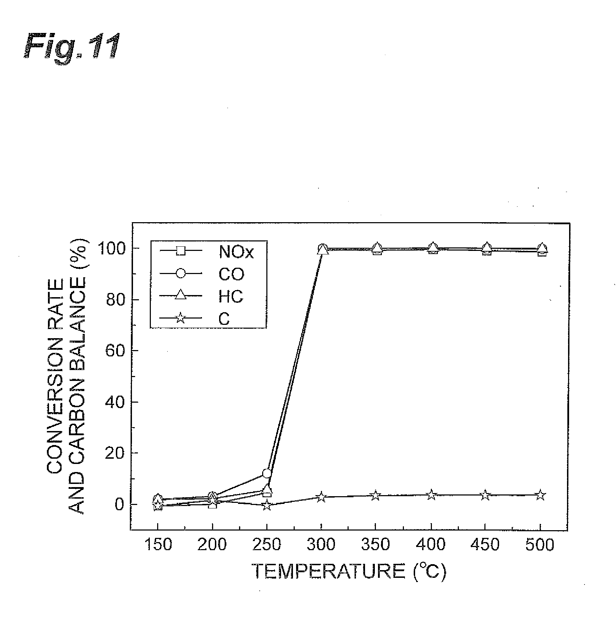

As Comparative Example, as a catalyst comprising Pt without using the carbon material, a Pt-alumina catalyst was placed in the reaction tube, a reaction gas was flowed, and measurement was performed in the same manner as above. The amount of Pt to be supported was 1.7% by mass that was approximately 8 to 10 times that in a commercially available three-way catalyst. The result is shown in Figure 11.

As shown in Figure 11, in the case of the Pt catalyst, at not more than 200°C, the conversion rates of $NO_x$, $C_3H_6$, and CO were almost zero. At 250°C, the conversion rate was very low; at not less than 300°C, the conversion rates of the three components of $NO_x$, $C_3H_6$, and CO were approximately 100%, and the three components were almost completely purged.

(Comparative Example 2)

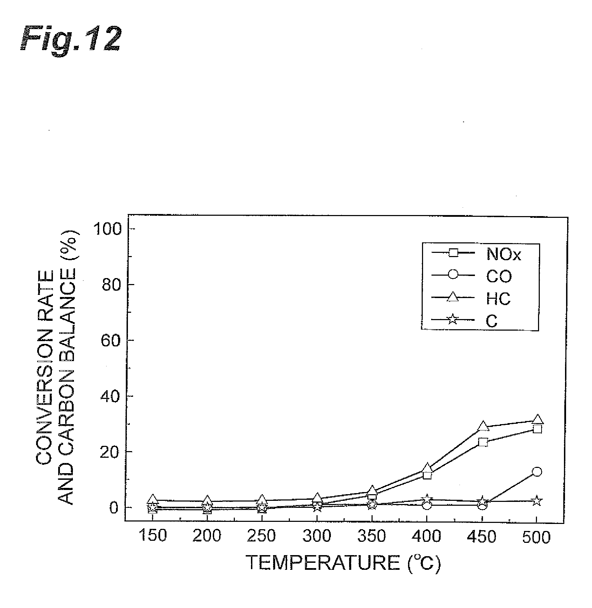

A catalyst obtained by further doping a catalyst comprising the carbon material with nitrogen was placed in the reaction tube, the reaction gas was flowed, and measurement was performed in the same manner as above. The condition of doping with nitrogen was the proportion of air to ammonia of 7:2.3, at 500°C, and for 3 hours. The result is shown in Figure 12.

As shown in Figure 12, in the catalyst obtained by further doping a catalyst comprising the carbon material with nitrogen, the conversion rates of the three components of $NO_x$, $C_3H_6$, and CO were not improved even if the temperature was raised to 500°C, and no catalyst effect was obtained.

(Comparative Example 3)

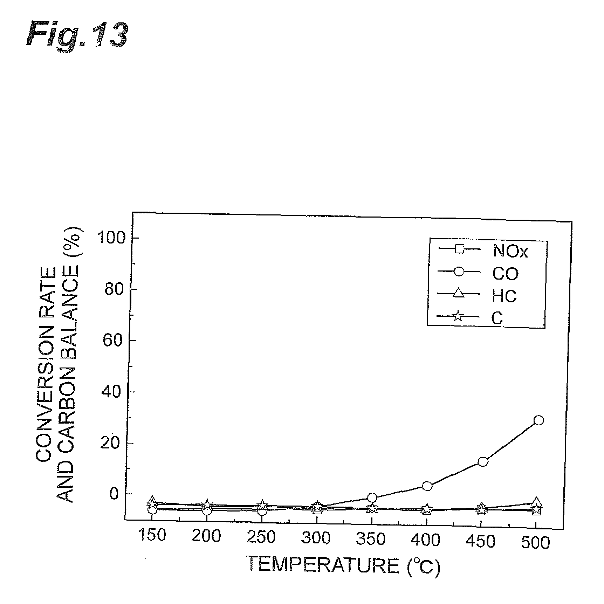

No catalyst was placed in the reaction tube, the reaction gas was flowed, and the conversion rates of $NO_x$, CO, and a hydrocarbon ($C_3H_6$), and carbon mass balance were measured. The result is shown in Figure 13.

As shown in Figure 13, in the case where no catalyst was used, the conversion rates of $NO_x$ and $C_3H_6$ at 150 to 500°C were almost zero. In CO, the conversion rate was gradually improved at not less than 300°C; however, even at 500°C, the conversion rate was 34%, and it was recognized that the gas is not purged without the catalyst.

Industrial Applicability

According to the present invention, the oxidation catalyst, reduction catalyst, and catalyst for purging exhaust gas that includes a carbon material without using Pt, and can purge $NO_x$, CO, or a hydrocarbon can be provided.

Reference Signs List

1...reference gas cylinder, 2...mass flow controller, 3...reaction tube, 4...electric heating furnace, 5...cooler, 6...gas analyzing apparatus, 10...catalyst, 11...quartz sand, 12...quartz wool, 13...thermocouple.

**Claims**

1. An oxidation catalyst comprising a carbon material prepared by calcining:

    a transition metal compound and a nitrogen-containing organic substance, or
    a transition metal compound, a nitrogen-containing organic substance, and a carbon compound not containing nitrogen, the oxidation catalyst oxidizing CO and/or a hydrocarbon.

2. The oxidation catalyst according to claim 1, wherein a temperature to oxidize the CO and/or the hydrocarbon is not less than 200°C.

3. A reduction catalyst comprising a carbon material prepared by calcining:

    a transition metal compound and a nitrogen-containing organic substance, or
    a transition metal compound, a nitrogen-containing organic substance, and a carbon compound not containing nitrogen, and
    at least one load material selected from the group consisting of Pd, Rh, Ru, Ni, Co, Fe, Ce, Cu, Ti, Zr, Sn, V, Nb, Ta, Cr, Mo, W, Bi, Mn, and compounds thereof supported on the carbon material, the reduction catalyst reducing $NO_x$.

4. The reduction catalyst according to claim 3, wherein a temperature to reduce the $NO_x$ is not less than 200°C.

5. The reduction catalyst according to claim 3 or 4, wherein
    the load material is at least one selected from the group consisting of Pd and Rh, and
    an amount of the load material is 0.01 to 15% by mass based on the mass of the carbon material.

6. A catalyst for purging exhaust gas, comprising at least one of the oxidation catalyst according to claim 1 or 2 and the reduction catalyst according to any one of claims 3 to 5.

EP 2 452 747 A1

Fig.1

*Fig.2*

## Fig.3

Fig.4

*Fig.5*

Fig.6

EP 2 452 747 A1

## Fig.7

*Fig.8*

Fig.9

# Fig.10

## Fig.11

## *Fig.12*

*Fig.13*

## INTERNATIONAL SEARCH REPORT

| | International application No. |
|---|---|
| | PCT/JP2010/059124 |

**A. CLASSIFICATION OF SUBJECT MATTER**
*B01J23/89*(2006.01)i, *B01D53/94*(2006.01)i, *F01N3/10*(2006.01)i

According to International Patent Classification (IPC) or to both national classification and IPC

**B. FIELDS SEARCHED**

Minimum documentation searched (classification system followed by classification symbols)
B01J23/89, B01D53/94, F01N3/10

Documentation searched other than minimum documentation to the extent that such documents are included in the fields searched
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)
JSTPlus/JMEDPlus/JST7580(JDreamII)

**C. DOCUMENTS CONSIDERED TO BE RELEVANT**

| Category* | Citation of document, with indication, where appropriate, of the relevant passages | Relevant to claim No. |
|---|---|---|
| A | JP 2007-026746 A (National University Corporation Gunma University), 01 February 2007 (01.02.2007), claims; examples (Family: none) | 1-6 |
| A | Atsuya FURUICHI et al., "Kinzoku Dope Tanso no Chosei to Sanso Kangen Kassei", Abstracts of 30th Annual Meeting of the Carbon Society of Japan, 04 December 2003 (04.12.2003), pages 30 to 31 | 1-6 |
| A | JP 2007-207662 A (National University Corporation Gunma University), 16 August 2007 (16.08.2007), claims; examples (Family: none) | 1-6 |

☒ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 August, 2010 (10.08.10) | 24 August, 2010 (24.08.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/059124

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2008-282725 A  (National University Corporation Gunma University), 20 November 2008 (20.11.2008), claims; examples (Family: none) | 1-6 |
| A | H.NIWA et al., X-ray absorption analysis of nitrogen contribution to oxygen reduction reaction in carbon alloy cathode catalysts for polymer electrolyte fuel cells, Journal of Power Sources, 2009.02.01, Vol.187, No.1, pp.93-97 | 1-6 |
| A | JP 57-118009 A  (Kanebo, Ltd.), 22 July 1982 (22.07.1982), claims; page 5, upper right column, line 19 to lower left column, line 9; page 5, lower right column, lines 12 to 16; examples (Family: none) | 1-6 |
| A | JP 59-132943 A  (Kabushiki Kaisha Gosei Kagaku Kenkyusho), 31 July 1984 (31.07.1984), claims; examples (Family: none) | 1-6 |
| A | JP 2005-125300 A  (Michio UEMURA), 19 May 2005 (19.05.2005), entire text (Family: none) | 1-6 |

Form PCT/ISA/210 (continuation of second sheet) (July 2009)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3038892 A
- JP 2004362802 A
- WO 2007049549 A